# EUROPEAN PATENT SPECIFICATION

(11) **EP 3 570 396 B1**
(45) Date of publication and mention of the grant of the patent: **18.01.2023**
(21) Application number: 19173154.6
(22) Date of filing: 07.05.2019
(51) Int. Cl.: H02G 3/12

(54) **ADJUSTABLE RING ASSEMBLY FOR ELECTRICAL INSTALLATION BOX**
EINSTELLBARE RINGANORDNUNG FÜR ELEKTRISCHEN INSTALLATIONSKASTEN
ENSEMBLE D'ANNEAU RÉGLABLE POUR BOÎTE D'INSTALLATION ÉLECTRIQUE

(30) Priority: 14.05.2018 IN 201841017985
(43) Date of publication of application: 20.11.2019
(73) Proprietor: Schneider Electric Industries SAS, 92500 Rueil-Malmaison (FR)
(72) Inventor: NAYAK, Gireesh Anant, 581314 Karnataka (IN); CHIKKANNA, Manohar, 560073 Bangalore (IN); KULLOLLI, Dharmveer, 560040 Bangalore (IN); VANAMANE, Vivek, 416415 Maharashtra (IN)
(74) Representative: Roberts, David

(56) References cited:
- EP-A1- 2 615 708
- NO-B1- 336 337
- SE-L- 8 601 962
- US-A1- 2004 050 423

## Description

### TECHNICAL FIELD OF THE INVENTION

The present invention relates to an installation box for electric wirings that is to be placed in building structures and more particularly relates to an adjustable ring assembled on the installation box that is effectively adjusted based on thickness of an installation surface.

### BACKGROUND OF THE INVENTION

Electrical installation boxes are used to terminate an electrical conduit in a structure frame. Such installation boxes are mounted inside concrete, bricks, plaster boards and wooden boards by glue, nails, screws, beam fixing etc. The installation box is further attached to an installation board of varying thickness. Such installation boards are available in different dimensions for example, single board, double boards, triple boards, wall papers etc. Hence the wiring device installation box must be compatible with different installation conditions. An extender with different sizes of extended cutouts and protrusion can correlate with the thickness of the finished installation board/wall.

In conventional electrical installation systems, the extender is mounted to the installation box by means of a fastener. Such prior art systems require a skilled person to rotate the extender or the fastener multiple times to align to the surface of the installation board/wall. Such an approach consumes most of the installation time and the installation box may not function properly and does not provide desired results. Additionally, aligning the extender to the installation surface and identification of alignment of thread or telescopic moment between the installation box and the extender is very difficult. The rotation of the extender multiple times may also cause damage to threads located on the electrical installation system and creates a problem for further rotation. Furthermore, the extender does not provide a secure attachment to the installation box, and the electrical parts may slide further within the box making it hard to reach or the extender may impact with the electrical parts inside the box. Hence, installing of the conventional electrical installation systems takes a substantially long time due to the required adjustment for the board/wall thickness.

Therefore, it is necessary to provide an improved adjustable ring assembly for an electrical installation box that is effectively adjusted based on thickness of the installation surface by simplifying assembly process to reduce the complexity and assembly time.

SE8601962L discloses an adjustable ring with external threads for installing in internal threads of an installation casing.

US2004/050423A1 discloses a two-piece, flush-mounting box designed for installing plumbing elements, which consists of the flush-mounting box itself and a flange that may be fastened to the side walls of the flush-mounting box at a certain distance from its front.

NO336337B1 discloses a mounting or coupling box which comprises a box housing, and optionally an adjusting ring which can be attached to an inner circumference of a mouth of a box housing.

### SUMMARY OF THE INVENTION

The following summary is provided to facilitate an understanding of some of the innovative features unique to the disclosed embodiments and is not intended to be a full description. A full appreciation of the various aspects of the embodiments disclosed herein can be gained by taking the entire specification, claims, drawings, and abstract as a whole.

It is, therefore, one aspect of the present invention to provide for an improved adjustable ring assembly for an electrical installation box that is effectively adjusted to achieve different heights based on thickness of an installation surface.

It is another aspect of the present invention to provide an improved adjustable ring assembly which is capable of eliminating damage to threads located on the ring assembly due to multiple installation of the ring on the installation box and providing smooth rotation operation.

It is further aspect of the present invention to provide an improved adjustable ring assembly that is threaded or telescopically attached to the installation box and is inexpensive, dependable and fully effective in accomplishing its intended purposes.

It is yet another aspect of the present invention to provide an improved adjustable ring assembly that eliminates impact with the electrical parts inside the installation box.

In one aspect of the present invention, an adjustable ring assembly for electrical installation box includes an extension ring with a cavity at its periphery and a plurality of alternate threaded and non-threaded areas on its outer surface. An angular aperture is formed on opposite sides of a lower end of the extension ring. A wedge member having an inclined edge on its both sides is pre-clipped within the aperture in such a way that the inclined edge slides inside the aperture. A screw member further connects the wedge member through the extension ring by sliding the wedge member via guideways located on the extension ring and the wedge member. The extension ring expands when torque is applied on the screw member to sandwich the extension ring between the screw member and the wedge member. A mounting box having a circular projection with an open end and a threaded area is formed inside the circular projection. The extension ring is assembled in and out of the circular projection by activating a telescopic action that engages non-threaded area of the extension ring with the threaded area of the projection or vice versa to achieve different heights based on thickness of an installation surface. The telescopic action is disengaged by rotating the extension ring so that the extension ring threadly engages and locks with the mounting box.

The angular aperture and the wedge member are composed of a threaded hole at its center to fit the wedge member within the aperture by threading the screw member on the threaded hole. The threaded area inside the circular projection is formed of a continuous saw tooth thread or a plurality of alternate threaded and non-threaded area. The extension ring is configured to be rotated anti-clockwise or vice versa so that the screw member on both sides of the extension ring is inclined at 45° and the non-threaded area of the extension ring is configured to be telescopically engaged with the threaded area formed inside the circular projection of the mounting box or vice versa in order to move the extension ring up and down. The extension ring is configured to be pulled from outside or the screw member is configured to be rotated to release the extension ring pressure and configured to move the extension ring up or down for aligning the extension ring to the surface of a wall or installation board with varying thickness.

The extension ring is configured to be rotated clockwise so that the screw member on both sides of the extension ring are placed in a vertical plane or a horizontal plane in such a way that the threaded area of the extension ring is configured to engage with the threaded area formed inside the circular projection of the mounting box to lock the extension ring with the mounting box. The mounting screw is tightened so that the extension ring expands due to the inclined edge on the wedge member for locking the mounting box with the extension ring. The mounting box is composed of a stopper along the inner circumference of the circular projection such that when the extension ring is pushed towards the box the stopper arrests the movement of the extension ring after a specified limit.

A sliding gap between the wedge member and the extension ring takes a wavy moment once the extension ring is pushed towards the mounting box for easily moving inside the circular projection and locking the mounting box with the extension ring. The guideways facilitate the linear moment of the wedge member and are configured to slide to expand the extension ring to hold the mounting box and the extension ring and configured to arrest the wedge member from rotation and expansion when the screw torque is applied on it. The mounting box has an inner space for accommodating an electric wiring component and a chamfer on the circumference of the outer projection to push the extension ring inside the mounting box.

### BRIEF DESCRIPTION OF THE DRAWINGS

The disclosed embodiments may be better understood by referring to the figures, in which like reference numerals refer to identical or functionally-similar elements throughout the separate views, further illustrate the present invention and, together with the detailed description of the invention, serve to explain the principles of the present invention.
FIG. 1 illustrates a front view of an extension ring and a wedge member, in accordance with the present invention;
FIG. 2 illustrates a back view of an extension ring and the wedge member, in accordance with the present invention;
FIG. 3 illustrates a front view of the extension ring assembled with the wedge member, in accordance with the present invention;
FIG. 4 illustrates a back view of the extension ring assembled with the wedge member, in accordance with the present invention;
FIG. 5 illustrates a perspective view of a mounting box and the extension ring assembled with the wedge member, in accordance with the present invention;
FIG. 6 illustrates a perspective view of an extension ring assembly showing the mounting box assembled with the extension ring and the wedge member, in accordance with the present invention;
FIG. 7 illustrates a cross sectional view of the extension ring assembled with the wedge member, in accordance with the present invention;
FIGS. 8-9 illustrate a sectional view of the mounting box telescopically engaged with the extension ring, in accordance with the present invention;
FIG. 10 illustrates a cross sectional view of the mounting box showing telescopic activation at inclined position, in accordance with the present invention;
FIGS. 11-12 illustrate a sectional view of the mounting box threadly engaged with the extension ring, in accordance with the present invention;
FIG. 13 illustrates a cross sectional view of the mounting box showing telescopic deactivation and thread rotation at horizontal or vertical position, in accordance with the present invention;
FIG. 14 illustrates a perspective view of a single installation board assembled with the extension ring assembly, in accordance with an exemplary embodiment of the present invention;
FIG. 15 illustrates a cross sectional view of the single installation board assembled with the extension ring assembly, in accordance with an exemplary embodiment of the present invention;
FIG. 16 illustrates a perspective view of a double installation board assembled with extension ring assembly, in accordance with an exemplary embodiment of the present invention; and
FIG. 17 illustrates a cross sectional view of the double installation board assembled with extension ring assembly, in accordance with an exemplary embodiment of the present invention.

### DETAILED DESCRIPTION OF THE INVENTION

The particular values and configurations discussed in these non-limiting examples can be varied and are cited merely to illustrate at least one embodiment and are not intended to limit the scope thereof.

In the following, numerous specific details are set forth to provide a thorough description of various embodiments. Certain embodiments may be practiced without these specific details or with some variations in detail. In some instances, certain features are described in less detail so as not to obscure other aspects. The level of detail associated with each of the elements or features should not be construed to qualify the novelty or importance of one feature over the others.

The claimed subject matter has been provided here with reference to one or more features or embodiments. Those skilled in the art will recognize and appreciate that, despite of the detailed nature of the exemplary embodiments provided here; changes and modifications may be applied to said embodiments without limiting or departing from the generally intended scope. These and various other adaptations and combinations of the embodiments provided here are within the scope of the disclosed subject matter as defined by the claims. Like numbers refer to like elements throughout.

The present invention is an adjustable ring assembly for an electrical installation box or a mounting box that can be effectively adjusted to achieve different heights based on thickness of an installation board surface. This adjustable ring assembly is capable of eliminating damage to the threads located on the ring assembly due to multiple installation of the ring on the mounting box and providing smooth rotation operation, which results in increasing the life time of the mounting box. The adjustable ring assembly is threaded or telescopically attached to the mounting box and is inexpensive, dependable and fully effective in accomplishing its intended purposes. Also, the adjustable ring assembly avoids impact with the metallic parts inside the mounting box in electrical systems. The present invention also eliminates the need for skilled persons to do the mounting process for the integration of the adjustable ring assembly with the installation surface and the height adjustment process based on thickness of the installation surface.

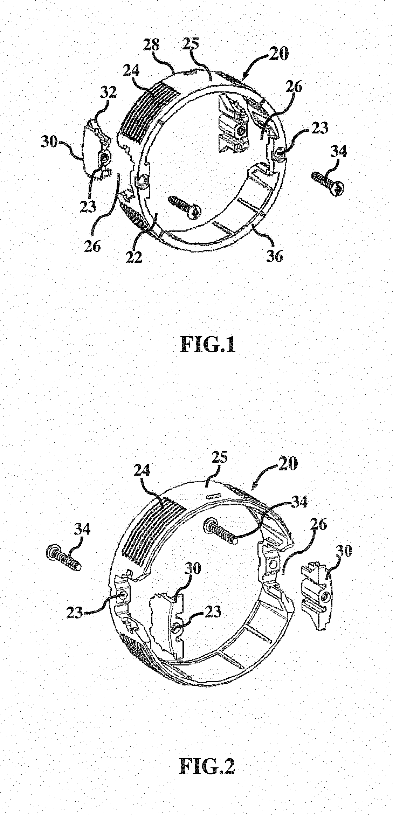

Referring to FIGS. 1-2 a front view and a back view of an extension ring (20) and a wedge member (30) for an electrical mounting box (40) is illustrated, in accordance with the present invention. The extension ring (20) is composed of an upper side (36), a lower side (28) and a cavity (22) at its periphery for receiving electrical components. The extension ring (20) is generally circular but may have other shapes, depending upon design considerations. The extension ring (20) comprises a plurality of alternate threaded and non-threaded areas (24, 25) on an outer surface of the extension ring (20). The extension ring (20) further includes an angular aperture (26) formed on the lower end (28) of the extension ring (20) on its opposite sides. The wedge member (30) includes an inclined edge (32) on its both sides. Each angular aperture (26) and the wedge member (30) include a threaded hole (23) at its center. Note that the installation box is also referred as mounting box only for the purpose of explanation, but not by the way of any limitations.

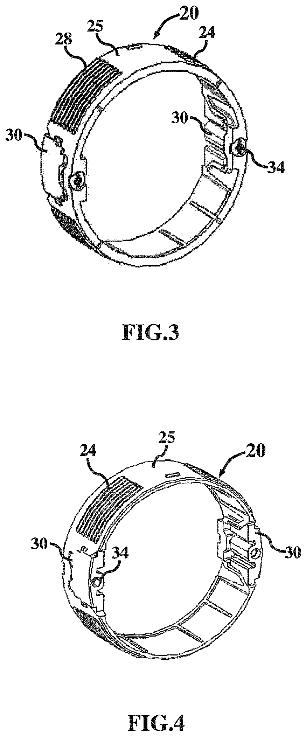

Referring to FIGS. 3-4 a front view and a back view of the extension ring (20) assembled with the wedge member (30) is illustrated, in accordance with the present invention. Note that in FIGS. 1-17, identical or similar parts or components are generally indicated by identical reference numerals. The wedge member (30) is pre-clipped within the aperture (26) in such a way that the inclined edge (32) slides inside the aperture (26). A pair of screw member (34) further connects the wedge member (30) through the extension ring (20) by sliding the wedge member (30) via a guideway (56) located on the extension ring (20) and via a guideway (56a) located on the wedge member (30). The extension ring (20) expands when torque is applied on the screw member (34) to sandwich the extension ring (20) between the screw member (34) and the wedge member (30). The threaded hole (23) is formed on the aperture (26) and the wedge member (30) for receiving the screw member (34) to fasten the wedge member (30) to the extension ring (20). Note that other fasteners of adjustable height that provide mechanical and electrical connectivity may be used based on design consideration.

The screw member (34) is held by the extension ring (20) and free to rotate with respect to the extension ring (20). The screw member (34) engages the threads in the hole (23) when the screw member (34) is turned. The inclination edges (32) formed at the end of the wedge member (30) expands when linear force or moment is converted to expansion force or moment of the extension ring (20). Linear force is achieved by the screw member (34) with the help of the wedge member (30) and the guideways (56, 56a) located on the extension ring (20) and the wedge member (30). The inclination edge (32) at the end of the wedge member (30) on its both sides slides on another inclination on the extension ring (20) and expands the extension ring (20). The extension ring (20) expands within a certain limit and does not expand till opening of the wedge member (30) lock.

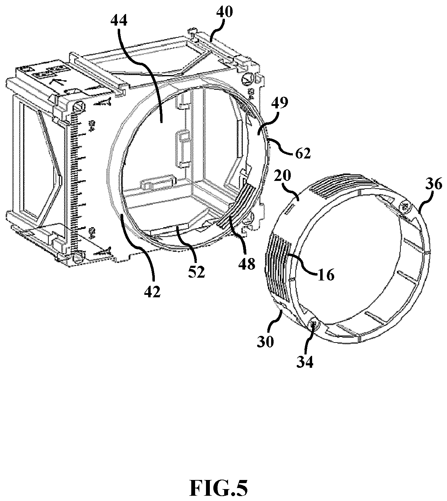

FIG. 5 illustrates a perspective view of the mounting box (40) with the extension ring (20) assembled with the wedge member (30), in accordance with the present invention. The mounting box (40) is composed of a circular projection (42) with an open end (44) and a threaded area (48) formed inside the circular projection (42). In a preferred embodiment, the threaded area (48) in the projection (42) is formed of a continuous saw tooth thread or a number of alternate threaded (48) and non-threaded area (49), based on design consideration. The shape of the mounting box (40) is generally rectangular, square, or cylindrical with the circular projection (42). The projection (42) is generally circular but may have other shapes, depending upon design considerations. The mounting box (40) has an inner space (60) for accommodating a connection component for electric wiring.

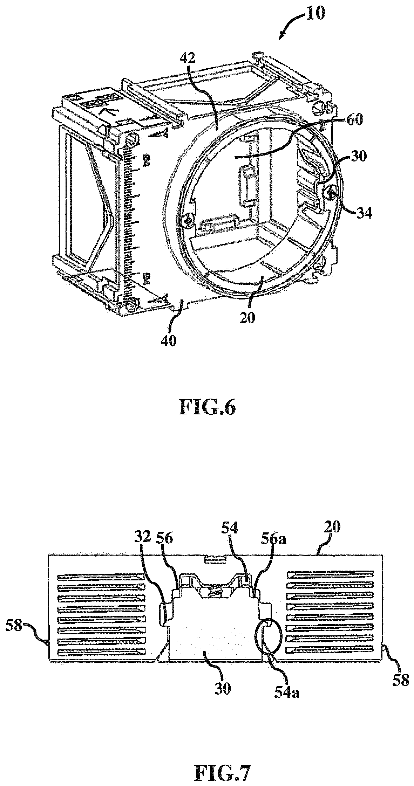

FIG. 6 illustrates a perspective view of an extension ring assembly (10) having the mounting box (40) assembled with the extension ring (20) and the wedge member (30), in accordance with the present invention. The extension ring assembly (10) with the mounting box (40) is used for mounting electrical components that is accessible through the opening (44) in the installation board (50, 55) or wall. The extension ring (20) is assembled inside the projection (42) by pushing the upper side (36) of the extension ring (20) against the projection (42). The mounting box (40) includes a chamfer (62) on the circumference of the outer projection (42) for pushing the extension ring (20) inside the mounting box (40). The threaded area (24) of the extension ring (20) engages with the threaded area (48) of the projection (42) to lock the outer projection (42) with the mounting box (40).

The extension ring (20) is also assembled in and out of the circular projection (42) by activating a telescopic action that engages the non-threaded area (25) of the extension ring (20) with the threaded area (48) of the projection (42) or vice versa to achieve different heights based on thickness of an installation surface (50). The telescopic action is disengaged by rotating the extension ring (20) so that the extension ring (20) threadly engages and locks with the mounting box (40). Note that the same extension ring (20) is used for the continuous saw tooth thread or alternate threads formed on the inner portion of the mounting box (40). In case of continuous saw tooth thread the extension ring (20) is rotated clockwise to assemble the extension ring (20) on the circular projection (42) of the mounting box (40).

The extension ring (20) is rotated anti-clockwise or vice versa to disassemble the extension ring (20) from the circular projection (42) of the mounting box (40). Note that the ring assembly (10) is used for both telescopic, threaded and hybrid engagement, based on design consideration. The length of the thread (48) is controlled to facilitate the telescopic action. The telescopic activation and deactivation of the ring assembly (10) will not damage the threads (24, 48) because there is no link between the threads (24, 48) and the wedge member (30). Once the extension ring (20) is pushed towards mounting box (40) there is limited degrees of freedom for the wedge member (30). In a preferred embodiment, the screw member (34) is also rotated to move the extension ring (20) up and down.

FIG. 7 illustrates a cross sectional view of the extension ring (20) assembled with the wedge member (30), in accordance with the present invention. The pre-clipping of the wedge member (30) on the angular aperture (26) of the extension ring (20) generates a sliding gap (54) in a vertical direction and a sliding gap (54a) in a horizontal direction. The sliding gap (54, 54a) easily moves the extension ring inside the circular projection (42) and locks the mounting box (40) with the extension ring (20). The wedge member (30) and the extension ring (20) further includes the guideways (56, 56a) that slides expand the extension ring (20) to hold the mounting box (40) and the extension ring (20). The screw member (34) and the wedge member (30) only expand the extension ring (20) but it may not expand the wedge member (30) to hold to the mounting box (40), to eliminate damage to the threaded area (24). The guideway (56, 56a) arrests the wedge member (30) from rotation and expansion when the screw torque is applied on it. The extension ring (20) has an identification feature (58) at its inner side to properly align the threaded areas (24) of the extension ring (20) and the mounting box (40) and provide feedback regarding the thread alignment.

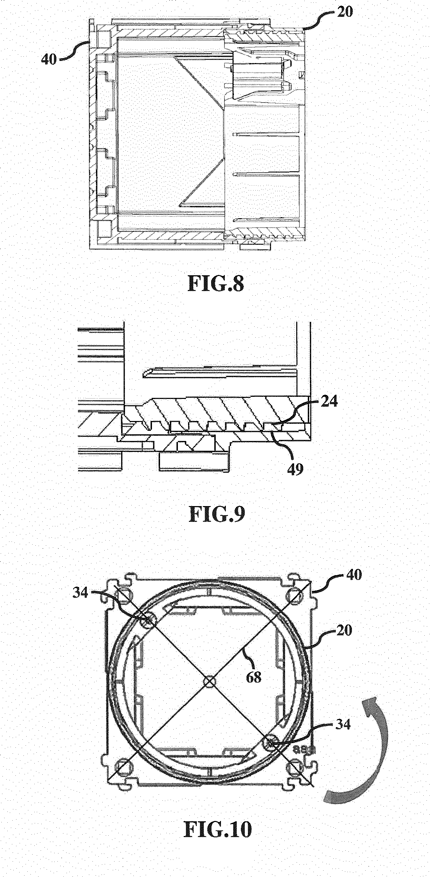

Referring to FIGS. 8-9 a sectional view of the mounting box (40) assembled with the extension ring (20) showing the threaded area (24) of the extension ring (20) telescopically engages with the non-threaded area (49) formed inside the circular projection (42) is illustrated, in accordance with the present invention. The extension ring (20) is rotated anti-clockwise or vice versa as shown in FIG. 10, so that the screw member (34) on both sides of the extension ring (20) is inclined at 45⁰ and the non-threaded area (25) of the extension ring (20) telescopically engaged with the threaded area (48) of the projection (42) or vice versa in order to move the extension ring (20) up and down.

The extension ring (20) is pulled from outside or the screw member (34) is rotated to release the extension ring pressure and move the extension ring (20) up or down for aligning the extension ring (20) to the surface of a wall or the installation board (50, 55) with varying thickness. In a hybrid arrangement, the telescopic activation is at 45 degree to move the extension ring (20) up and down easily and drastically. The telescopic activation is used to take the extension ring (20) out when the mounting box (40) is mounted on the double, triple board or in case of wall paper variation, tiles dimension on the concrete and also paint thickness impacting on installation. The telescopic activation is also used when glue thickness is more on the mounting box (40). The mounting box (40) is mounted on a plaster board by glue so the mounting box (40) goes in, to align extension ring (20) to the front surface. The rapid adjustment to align the extension ring (20) to the front surface of the installation board/ wall is achieved by the telescopic activation of the extension ring (20).

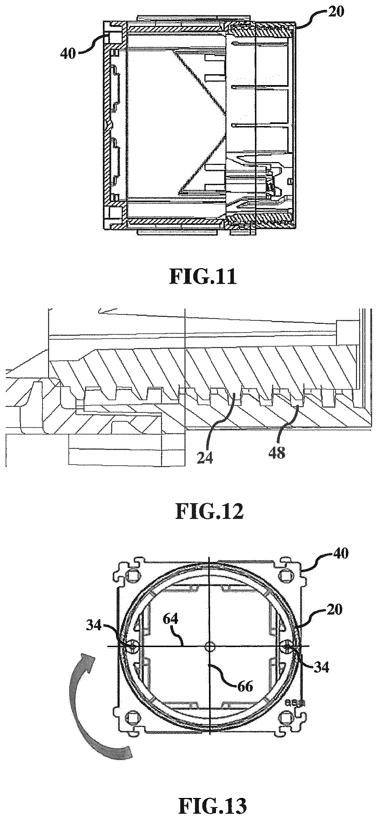

FIGS. 11-12 illustrate a sectional view of the mounting box (40) assembled with the extension ring (20) showing the threaded area (24) of the extension ring (20) engages with the threaded area (48) formed inside the circular projection (42), in accordance with the present invention. The extension ring (20) is rotated clockwise at 90° so that the screw member (34) on both sides of the extension ring (20) is placed in a vertical plane (66) or a horizontal plane (64). The threaded area (24) of the extension ring (20) engages with the threaded area (48) of the projection (42) to lock the extension ring (20) with the mounting box (40) to deactivate the telescopic activation.

The screw member (34) is tightened so that the extension ring (20) expands due to the inclined edge (32) on the wedge member (30) for locking the mounting box (40) with the extension ring (20). Referring to FIG. 13 a sectional view of the mounting box (40) showing telescopic deactivation and thread rotation active at the horizontal position (64) or vertical position (66) is illustrated, in accordance with the present invention. The extension ring (20) is rotated clockwise so that the threads on the extension ring (20) and the circular projection (42) will engage and telescopic disengagement happens. The threaded portion (48) of the extension ring (20) is replaced by the non-threaded area by rotating the extension ring (20) anti-clockwise to formulate telescopic action once again. The fine adjustment to align the extension ring (20) to the front surface of the installation board/ wall is achieved by adjusting the extension ring (20).

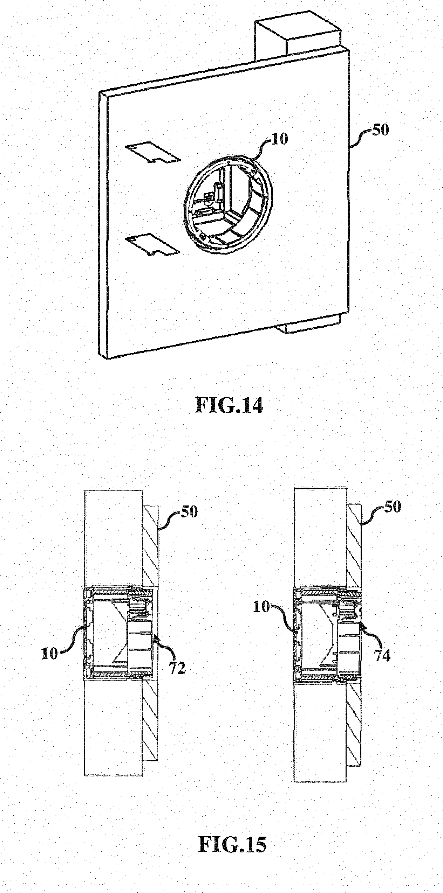

FIG. 14 illustrates a perspective view of a single installation board (50) assembled with the extension ring assembly (10), in accordance with the present invention. The extension ring assembly (10) is assembled on the single installation board (50) through an opening in the installation board (50). The mounting box (40) is mounted on the single installation board (50) by glue, nails, screws and beam fixing etc. The extension ring assembly (10) is within the single installation board (50) as shown by arrow (72). Hence, the extension ring (20) is rotated to activate the telescopic engagement as shown in FIG. 10, to level the single installation board (50) with the surface of the installation board (50).

The extension ring (20) is rotated anti-clockwise or vice versa so that the screw member (34) on both sides of the extension ring (20) is inclined at 45° and the non-threaded area (25) of the extension ring (20) telescopically engaged with the threaded area (48) of the projection (42) or vice versa in order to move the extension ring (20) up, as shown by arrow (74). Thus, the mounting box (40) is aligned with the surface of the installation board (50). Once telescopic engagement is activated the hybrid extension ring (20) is pulled from outside or the screw member (34) is rotated to release the extension ring pressure and take it out. The fine adjustment to align the extension ring (20) to the front surface of the installation board (50) is also achieved by adjusting the extension ring (20).

The torque is applied on the screw member (34) and the screw member (34) pulls the wedge member (30) against the extension ring (20) and extension ring (20) expands due to bottom slope and locks the rotary motion and holds on the installation board (50, 55). As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for the claims and/or as a representative basis for teaching one skilled in the art to variously employ the present invention.

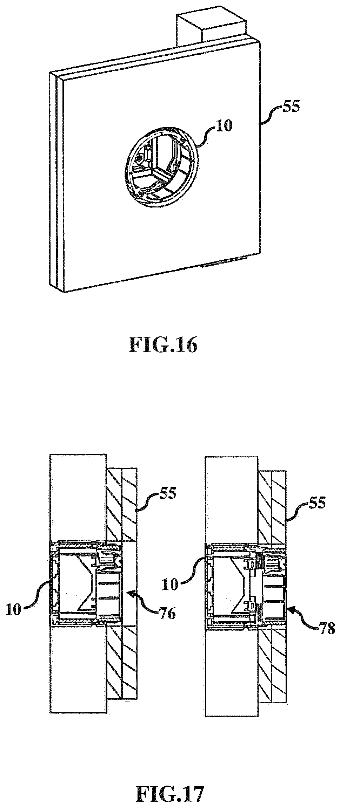

FIG. 16 illustrates a perspective view of a double installation board (55) assembled with the extension ring assembly (10), in accordance with the present invention. The extension ring assembly (10) is also assembled on the double installation board (55) through the opening in the installation board (55). The mounting box (40) is mounted on the double installation board (55) by glue, nails, screws and beam fixing etc. The mounting box (40) and the extension ring (20) are within the double installation board (55) as shown by arrow (76). Hence, the extension ring (20) is rotated to activate the telescopic engagement as shown in FIG. 10, to level the double installation board (55) with the surface of the installation board (55). The extension ring (20) is rotated anti-clockwise or vice versa so that the screw member (34) on both sides of the extension ring (20) is inclined at 45° and the non-threaded area (25) of the extension ring (20) telescopically engaged with the threaded area (48) of the projection (42) or vice versa in order to move the extension ring (20) up, as shown by arrow (78). The extension ring (20) moves in axial direction rapidly to align to the surface of the installation board (55).

The present invention is easy to assemble and save time and additional process in the assembly line. The wedge member (30) is easily installed into the extension ring (20) and there is no slip of the wedge member (30) from extension ring (20) while tightening of the screw member (34). Pre-clipping of the wedge member (30) within the extension ring (20) facilitates normal tightening operation and when screw member (34) is tightened the extension ring (20) expands and holds in telescopic threads.

The extension ring (20) holds in the mounting box (40) in multiple locations and the extension ring (20) is directly pushed to the mounting box (40) due to clearance between the wedge member (30) and the extension ring (20). The thread damage while multiple installations are eliminated and provide smooth rotation operation. The assembly (10) is used for both telescopic and threaded extension ring (20) and has more pull out force capability than existing screw and telescopic rings. The extension ring assembly (10) can readily adapted to a variety of ranges of operation, has a comparatively low cost of construction, is readily assembled, presents a low risk of damage to the inner electrical components during assembly or operation, is accurate and reliable in operation than known prior art.

Therefore, the present invention is not limited to the embodiments herein before described which may be varied in both construction and detail within the scope of the appended claims. Many modification and other embodiments of the invention may come to mind to one skilled in the art to which this invention pertains having the benefit of the teachings presented in the foregoing descriptions and associated drawings. In addition, some changes may be made to these specific embodiments, and such modifications are contemplated by the principle of the present invention. Therefore, it is to be understood that the invention is not to be limited to the specific embodiments disclosed and that modifications and other embodiments are intended to be included within the scope of the appended claims.

## Claims

1. An adjustable ring assembly (10) for an electrical installation box, comprising:
an extension ring (20) with a cavity (22) at its periphery and an angular aperture (26) formed on opposite sides of one end of the extension ring (20);
a wedge member (30) having an inclined edge (32) on its both sides;
a screw member (34) further connects the wedge member (30) through the extension ring (20) by sliding the wedge member (30) via a guideway (56, 56a) located on the extension ring (20) and the wedge member (30) so that the extension ring (20) expands when torque is applied on the screw member (34) to sandwich the extension ring (20) between the screw member (34) and the wedge member (30);
a mounting box (40) having a circular projection (42) with an open end and a threaded area (48) formed inside the circular projection (42);
**characterized in that** the wedge member (30) is pre-clipped within the aperture (26) in such a way that the inclined edge (32) slides inside the aperture (26);
the extension ring (20) having a plurality of alternate threaded and non-threaded areas (24, 25) on its outer surface; and
the extension ring (20) is assembled in and out of the circular projection (42) by activating a telescopic action that engages the non-threaded area (25) of the extension ring (20) with the threaded area (48) of the projection (42) or vice versa to achieve different heights based on thickness of an installation surface (50) and the telescopic action is disengaged by rotating the extension ring (20) so that the extension ring (20) threadly engages and locks with the mounting box (40).

2. The assembly of claim 1, wherein the angular aperture (26) and the wedge member (30) has a threaded hole (23) at its center to fit the wedge member (30) within the aperture (26) by threading the screw member (34) on the threaded hole (23).

3. The assembly of claim 1, wherein the threaded area (48) in the projection (42) is formed of a continuous saw tooth thread or a plurality of alternate threaded area (48) and non-threaded area (49).

4. The assembly of claim 1, wherein the extension ring (20) is configured to be rotated anti-clockwise or vice versa so that the screw member (34) on both sides of the extension ring (20) is inclined at 45° and the non-threaded area (25) of the extension ring (20) is configured to be telescopically engaged with the threaded area (48) of the projection (42) or vice versa in order to move the extension ring (20) up and down.

5. The assembly of claims 1 and 4, wherein the extension ring (20) is configured to be pulled from outside or the screw member (34) is configured to be rotated to release the extension ring pressure and configured to move the extension ring (20) up or down for aligning the extension ring (20) to the surface (50) of a wall or the installation board with varying thickness.

6. The assembly of claim 1, wherein the extension ring (20) is configured to be rotated clockwise so that the screw member (34) on both sides of the extension ring (20) are placed in a vertical plane (66) or a horizontal plane (64) in such a way that the threaded area (24) of the extension ring (20) is configured to engage with the threaded area (48) of the projection (42) to lock the extension ring (20) with the mounting box (40).

7. The assembly of claim 1, the wherein the screw member (34) is tightened so that the extension ring (20) expands due to the inclined edge (32) on the wedge member (30) for locking the mounting box (40) with the extension ring (20).

8. The assembly of claim 1, wherein the mounting box (40) comprises a stopper (52) along the inner circumference of the projection (42) such that when the extension ring (20) is pushed towards the box (40) the stopper (52) arrests the movement of the extension ring (20) after a specified limit.

9. The assembly of claim 1, wherein a sliding gap (54, 54a) between the wedge member (30) and the extension ring (20) is configured to move the extension ring inside the circular projection (42) and lock the mounting box (40) with the extension ring (20).

10. The assembly of claim 1, wherein the guideways (56, 56a) are configured to slide to expand the extension ring (20) to hold the mounting box (40) and the extension ring (20) and configured to arrest the wedge member (30) from rotation and expansion when the screw torque is applied on it.

11. The assembly of claim 1, wherein the mounting box (40) is composed of an inner space (60) for accommodating an electric wiring component and a chamfer (62) on the circumference of the outer projection (42) to push the extension ring (20) inside the mounting box (40).

## Patentansprüche

1. Verstellbare Ringanordnung (10) für einen elektrischen Installationskasten, aufweisend:
einen Verlängerungsring (20) mit einem Hohlraum (22) an seinem Umfang und
einer Winkelöffnung (26), die an gegenüberliegenden Seiten eines unteren Endes des Verlängerungsrings (20) ausgebildet ist;
ein Keilelement (30) mit einer geneigten Kante (32) an seinen beiden Seiten;
ein Schraubenelement (34), das durch Schieben des Keilelements (30) über eine Führungsbahn (56, 56a), die sich auf dem Verlängerungsring (20) und dem Keilelement (30) befindet, ferner das Keilelement (30) durch den Verlängerungsring (20) verbindet, sodass sich der Verlängerungsring (20) ausdehnt, wenn ein Drehmoment auf das Schraubenelement (34) ausgeübt wird, um den Verlängerungsring (20) zwischen dem Schraubenelement (34) und dem Keilelement (30) einzuschieben;
einen Montagekasten (40), der einen kreisförmigen Vorsprung (42) mit einem offenen Ende und einen innerhalb des kreisförmigen Vorsprungs (42) gebildeten Gewindebereich (48) hat;
**dadurch gekennzeichnet, dass** das Keilelement (30) innerhalb der Öffnung (26) derart vorgeklemmt ist, dass die geneigte Kante (32) in die Öffnung (26) hineingleitet; wobei der Verlängerungsring (20) mehrere abwechselnd mit Gewinde und nicht mit Gewinde versehene Bereiche (24, 25) auf seiner Außenfläche hat; und der Verlängerungsring (20) in und aus dem kreisförmigen Vorsprung (42) durch Aktivieren einer Teleskopwirkung montiert ist, die den gewindelosen Bereich (25) des Verlängerungsrings (20) mit dem Gewindebereich (48) des Vorsprungs (42) in Eingriff bringt oder umgekehrt, um unterschiedliche Höhen basierend auf der Dicke einer Installationsfläche (50) zu erreichen, und die Teleskopwirkung durch Drehen des Verlängerungsrings (20) ausgeschaltet wird, sodass der Verlängerungsring (20) den Montagekasten (40) gewindemäßig eingreift und mit ihm verriegelt.

2. Anordnung nach Anspruch 1, bei welcher die Winkelöffnung (26) und das Keilelement (30) an ihrem Zentrum ein Gewindeloch (23) haben, um das Keilelement (30) in der Öffnung (26) einzupassen, indem das Schraubenelement (34) auf das Gewindeloch (23) eingezogen wird.

3. Anordnung nach Anspruch 1, bei welcher der Gewindebereich (48) im Vorsprung (42) aus einem kontinuierlichen Sägezahngewinde oder mehreren abwechselnd Gewindebereich (48) und gewindelose Bereich (49) gebildet ist.

4. Anordnung nach Anspruch 1, bei welcher der Verlängerungsring (20) ausgestaltet ist, um im Gegenuhrzeigersinn oder umgekehrt gedreht zu werden, sodass das Schraubenelement (34) auf beiden Seiten des Verlängerungsrings (20) um 45° geneigt ist und der gewindelose Bereich (25) des Verlängerungsrings (20) ausgestaltet ist, um teleskopartig mit dem Gewindebereich (48) des Vorsprungs (42) in Eingriff zu sein oder umgekehrt, um den Verlängerungsring (20) nach oben oder unten zu bewegen.

5. Anordnung nach den Ansprüchen 1 und 4, bei welcher der Verlängerungsring (20) ausgestaltet ist, um von außen gezogen zu werden, oder das Schraubenelement (34) ausgestaltet ist, um gedreht zu werden, um den Verlängerungsringdruck zu lösen, und ausgestaltet ist, um den Verlängerungsring (20) nach oben oder unten zu bewegen zum Ausrichten des Verlängerungsrings (20) auf die Oberfläche (50) einer Wand oder der Installationsplatte mit unterschiedlicher Dicke.

6. Anordnung nach Anspruch 1, bei welcher der Verlängerungsring (20) ausgestaltet ist, um im Uhrzeigersinn gedreht zu werden, sodass das Schraubenelement (34) auf beiden Seiten des Verlängerungsrings (20) in einer vertikalen Ebene (66) oder einer horizontalen Ebene (64) so angeordnet ist, dass der Gewindebereich (24) des Verlängerungsrings (20) ausgestaltet ist, um mit dem Gewindebereich (48) des Vorsprungs (42) in Eingriff zu kommen, um den Verlängerungsring (20) mit dem Montagekasten (40) zu verriegeln.

7. Anordnung nach Anspruch 1, bei welcher das Schraubenelement (34) angezogen wird, sodass sich der Verlängerungsring (20) aufgrund der geneigten Kante (32) am Keilelement (30) ausdehnt zum Verriegeln des Montagekastens (40) mit dem Verlängerungsring (20).

8. Anordnung nach Anspruch 1, bei welcher der Montagekasten (40) einen Anschlag (52) entlang des Innenumfangs des Vorsprungs (42) derart aufweist, dass, wenn der Verlängerungsring (20) in Richtung zum Kasten (40) gedrückt wird, der Anschlag (52) die Bewegung des Verlängerungsrings (20) nach einer festgelegten Grenze stoppt.

9. Anordnung nach Anspruch 1, bei welcher ein Gleitspalt (54, 54a) zwischen dem Keilelement (30) und dem Verlängerungsring (20) ausgestaltet ist, um den Verlängerungsring innerhalb des kreisförmigen Vorsprungs (42) zu bewegen und den Montagekasten (40) mit dem Verlängerungsring (20) zu verriegeln.

10. Anordnung nach Anspruch 1, bei welcher die Führungsbahnen (56, 56a) ausgestaltet sind, um zu gleiten, um den Verlängerungsring (20) zu expandieren, um den Montagekasten (40) und den Verlängerungsring (20) zu halten, und ausgestaltet ist, um das Keilelement (30) von Drehung und Expansion zu stoppen, wenn das Schraubendrehmoment darauf aufgebracht wird.

11. Anordnung nach Anspruch 1, bei welcher der Montagekasten (40) aus einem Innenraum (60) zum Aufnehmen einer elektrischen Verdrahtungskomponente und einer Abschrägung (62) am Umfang des äußeren Vorsprungs (42) besteht zum Drücken des Verlängerungsrings (20) im Montagekasten (40).

## Revendications

1. Ensemble à anneau réglable (10) pour un boîtier d'installation électrique, comprenant :
un anneau d'extension (20) avec une cavité (22) à sa périphérie et une ouverture angulaire (26) formée sur des côtés opposés d'une extrémité de l'anneau d'extension (20) ;
un élément de cale (30) ayant un bord incliné (32) sur ses deux côtés ;
un élément de vis (34) reliant en outre l'élément de cale (30) à travers l'anneau d'extension (20) en faisant coulisser l'élément de cale (30) via une glissière (56, 56a) située sur l'anneau d'extension (20) et sur l'élément de cale (30), de sorte que l'anneau d'extension (20) se dilate lorsqu'un couple est appliqué sur l'élément de vis (34) pour prendre en sandwich l'anneau d'extension (20) entre l'élément de vis (34) et l'élément de cale (30) ;
un boîtier de montage (40) ayant une saillie circulaire (42) avec une extrémité ouverte et une zone filetée (48) formée à l'intérieur de la saillie circulaire (42),
**caractérisé en ce que** :
l'élément de cale (30) est préclipsé à l'intérieur de l'ouverture (26) de telle sorte que le bord incliné (32) coulisse à l'intérieur de l'ouverture (26) ;
l'anneau d'extension (20) a une pluralité de zones filetées et non filetées en alternance (24, 25) sur sa surface extérieure ; et
l'anneau d'extension (20) est assemblé dans et hors de la saillie circulaire (42) en activant une action télescopique qui engage la zone non filetée (25) de l'anneau d'extension (20) dans la zone filetée (48) de la saillie (42) ou vice versa afin d'obtenir différentes hauteurs sur la base de l'épaisseur d'une surface d'installation (50), et l'action télescopique est désengagée en faisant tourner l'anneau d'extension (20) de sorte que l'anneau d'extension (20) s'engage par filetage et se bloque dans le boîtier de montage (40).

2. Ensemble selon la revendication 1, dans lequel l'ouverture angulaire (26) et l'élément de cale (30) ont un trou fileté (23) en leur centre pour adapter l'élément de cale (30) à l'intérieur de l'ouverture (26) en enfilant l'élément de vis (34) dans le trou fileté (23).

3. Ensemble selon la revendication 1, dans lequel la zone filetée (48) dans la saillie (42) est formée d'un filetage continu en dents de scie ou d'une pluralité de zones filetées (48) et de zones non filetées (49) en alternance.

4. Ensemble selon la revendication 1, dans lequel l'anneau d'extension (20) est configuré pour être tourné dans le sens inverse des aiguilles d'une montre ou vice versa de sorte que l'élément de vis (34) sur les deux côtés de l'anneau d'extension (20) soit incliné à 45° et la zone non filetée (25) de l'anneau d'extension (20) soit configurée pour être engagée de manière télescopique dans la zone filetée (48) de la saillie (42) ou vice versa, afin de déplacer l'anneau d'extension (20) vers le haut et vers le bas.

5. Ensemble selon les revendications 1 et 4, dans lequel l'anneau d'extension (20) est configuré pour être tiré de l'extérieur, ou l'élément de vis (34) est configuré pour être tourné afin de relâcher la pression de l'anneau d'extension et configuré pour déplacer l'anneau d'extension (20) vers le haut ou vers le bas afin d'aligner l'anneau d'extension (20) sur la surface (50) d'une paroi ou du panneau d'installation d'épaisseur variable.

6. Ensemble selon la revendication 1, dans lequel l'anneau d'extension (20) est configuré pour être tourné dans le sens des aiguilles d'une montre de sorte que l'élément de vis (34) sur les deux côtés de l'anneau d'extension (20) soit placé dans un plan vertical (66) ou dans un plan horizontal (64), de telle sorte que la zone filetée (24) de l'anneau d'extension (20) soit configurée pour s'engager dans la zone filetée (48) de la saillie (42) pour bloquer l'anneau d'extension (20) dans le boîtier de montage (40).

7. Ensemble selon la revendication 1, dans lequel l'élément de vis (34) est serré de sorte que l'anneau d'extension (20) se dilate à cause du bord incliné (32) sur l'élément de cale (30) afin de bloquer l'anneau d'extension (20) dans le boîtier de montage (40).

8. Ensemble selon la revendication 1, dans lequel le boîtier de montage (40) comprend une butée (52) le long de la circonférence interne de la saillie (42) de sorte que, lorsque l'anneau d'extension (20) est poussé vers le boîtier (40), la butée (52) arrête le mouvement de l'anneau d'extension (20) après une limite spécifiée.

9. Ensemble selon la revendication 1, dans lequel un espace coulissant (54, 54a) entre l'élément de cale (30) et l'anneau d'extension (20) est configuré pour déplacer l'anneau d'extension à l'intérieur de la saillie circulaire (42) et pour bloquer l'anneau d'extension (20) dans le boîtier de montage (40).

10. Ensemble selon la revendication 1, dans lequel les glissières (56, 56a) sont configurées pour faire coulisser et étendre l'anneau d'extension (20) afin de retenir le boîtier de montage (40) et l'anneau d'extension (20), et configurées pour arrêter la rotation et l'extension de l'élément de cale (30) lorsqu'il est soumis au couple de vis.

11. Ensemble selon la revendication 1, dans lequel le boîtier de montage (40) est composé d'un espace intérieur (60) servant à loger un composant de câblage électrique, et d'un chanfrein (62) sur la circonférence de la saillie externe (42) pour pousser l'anneau d'extension (20) à l'intérieur du boîtier de montage (40).
